# DEMANDE DE BREVET EUROPEEN

(11) **EP 1 510 791 A1**
(43) Date de publication de la demande: **02.03.2005**
(21) Numéro de dépôt: 03019720.6
(22) Date de dépôt: 29.08.2003
(51) Int. Cl.: G01D 13/22, G12B 11/04, G01B 11/28, G01D 11/28, G01D 13/28

(54) **Dispositif d'encliquetage d'aiguille indicatrice démontable**

(71) Demandeur: Microcomponents AG, 2540 Grenchen (CH)
(72) Inventeur: Vuilliomenet, Marc, 2400 Le Locle (CH); Pages, Albert, 2052 Fontainemelon (CH); Jacob, Gerard, 2072 Saint-Blaise (CH)
(74) Mandataire: Ravenel, Thierry Gérard Louis

(57) **Abrégé**

La présente invention concerne un dispositif indicateur à aiguille du type utilisé généralement dans les tableaux de bord de véhicules automobiles. Plus précisément, la présente invention concerne un tel type de dispositif comportant un arbre d'entraînement creux (12) entraîné en rotation par un moteur conventionnel et à l'intérieur duquel est logée l'aiguille (4), par sa tige. L'invention prévoit une pluralité de modes de réalisation comportant chacun un type de liaison mécanique particulier permettant d'améliorer le démontage de l'aiguille hors de l'arbre creux, sans endommager ni l'aiguille, ni l'arbre. Ainsi, une même aiguille peut être démontée de l'arbre puis remise en place plusieurs fois avant de devenir trop endommagée pour être encore utilisable.

## Description

### DOMAINE TECHNIQUE

La présente invention concerne un dispositif indicateur comportant une aiguille comprenant notamment une tige portant un index, et un organe moteur comprenant un arbre d'axe X1 d'entraînement de l'aiguille. L'invention concerne plus précisément un tel dispositif dans lequel l'arbre d'entraînement présente un creux à l'intérieur duquel est destinée à être montée la tige d'aiguille.

Un exemple d'application courant pour ce type de dispositifs indicateurs à aiguille est l'indication des variations d'une grandeur mesurée dans un tableau de bord de véhicule automobile, tel que la vitesse de déplacement du véhicule, le régime moteur du véhicule, le niveau de carburant ou encore la température du moteur.

### ARRIÈRE-PLAN TECHNOLOGIQUE

De tels dispositifs sont connus de l'art antérieur. La demande de brevet EP 0 536 485 A2 décrit, dans un mode de réalisation particulier, un dispositif indicateur à aiguille entraînée par un arbre d'entraînement creux. L'aiguille comporte une tige sensiblement cylindrique portant un index permettant d'indiquer les variations d'une grandeur mesurée, en regard de marques adaptées portées par un cadran.

Ces dispositifs sont soumis à des critères relativement exigeants en ce qui concerne leurs propriétés mécaniques, en particulier du point de vue de la tenue dans le temps et du point de vue des conditions de fonctionnement. A titre d'exemple, on peut noter que ces dispositifs indicateurs doivent pouvoir parfaitement assurer leur fonction dans une plage d'utilisation en température allant de -40° à +105°C, selon les normes actuellement en vigueur dans le domaine de la construction automobile.

Ce type de dispositifs indicateurs à aiguille de l'art antérieur présente un inconvénient important du fait que, typiquement, l'aiguille ne peut plus être démontée du dispositif une fois qu'elle a été mise en place. Cet inconvénient est directement lié aux exigences précitées qui nécessitent une tenue sans faille de l'aiguille dans son arbre d'entraînement.

Il convient de noter que, dans ces dispositifs dont les moteurs sont généralement destinés à être arrangés sous un cadran, l'aiguille est chassée dans son arbre d'entraînement à la fin des opérations de montage, c'est-à-dire une fois que le cadran a été mis en place.

Or, il n'est pas rare, lors du montage du tableau de bord d'un véhicule automobile ou après celui-ci, qu'un défaut y soit détecté, nécessitant un démontage de certains éléments, notamment du cadran.

Dans un tel cas de figure, l'aiguille d'un dispositif indicateur de l'art antérieur doit être arrachée du moteur et subit généralement des dégâts irréversibles dans cette opération. De ce fait, l'opérateur procédant au montage du tableau de bord doit utiliser une nouvelle aiguille pour remplacer l'aiguille arrachée une fois qu'il a été remédié au défaut.

### RÉSUMÉ DE L'INVENTION

Un but de la présente invention est de pallier aux inconvénients de l'art antérieur susmentionnés en proposant une structure de dispositif indicateur à aiguille permettant de démonter et remonter une même aiguille sur le moteur une pluralité de fois sans l'endommager.

Dans ce but, la présente invention concerne un dispositif indicateur du type indiqué plus haut, caractérisé par le fait qu'il comporte en outre des moyens mécaniques pour permettre une pluralité de démontages de ladite aiguille hors de l'arbre. En particulier, la pluralité de démontages peut avoir lieu sans que l'arbre d'entraînement ou l'aiguille ne subisse de dommages les rendant inaptes à l'utilisation.

Plus précisément, la présente invention prévoit une pluralité de modes de réalisation pour la mise en oeuvre des moyens mécaniques susmentionnés.

En effet, on peut prévoir d'assurer la liaison mécanique entre la tige d'aiguille et l'arbre creux en ménageant une pluralité de pans à l'intérieur de l'arbre, la tige d'aiguille étant sensiblement cylindrique. De cette manière, les forces de frottements intervenant entre la tige d'aiguille et l'arbre creux sont localisées sensiblement au niveau de la ligne médiane de chacun des pans qui est parallèle à l'axe X1 plutôt que sur tout un cylindre.

On peut également prévoir, d'autre part, que l'aiguille comporte une bague annulaire solidaire de la base de son index et destinée à coopérer avec la surface extérieure de l'extrémité de l'arbre creux. Cette caractéristique permet de répartir une partie des forces de frottements en dehors de l'interface entre la tige d'aiguille et l'intérieur de l'arbre creux. Une variante est également prévue dans ce mode de réalisation, selon laquelle l'extrémité de l'arbre destinée à recevoir l'aiguille comprend au moins une fente orientée dans une direction sensiblement parallèle à l'axe X1. Une telle fente permet de rendre plus élastique l'extrémité de l'arbre recevant la tige d'aiguille et améliore ainsi l'aptitude du dispositif selon l'invention à subir des démontages successifs sans dommage.

Un mode de réalisation supplémentaire prévoit un clipsage de la tige d'aiguille à l'intérieur de l'arbre creux. A cet effet, l'arbre comprend au moins une protubérance faisant saillie en direction de l'axe X1 et destinée à coopérer avec un évidement adapté ménagé dans la tige de l'aiguille. Selon une variante préférée de ce mode de réalisation, la protubérance est réalisée sous la forme d'un bourrelet annulaire, tandis que le renfoncement se présente sous la forme d'une gorge étendue sur toute la périphérie de la tige d'aiguille.

De manière préférée, dans tous les modes de réalisation mentionnés ci-dessus, les déformations qui interviennent lors de la mise en place de la tige d'aiguille à l'intérieur de l'arbre creux prennent effet alors que les différents éléments mis en jeu restent dans leurs domaines de déformations élastiques respectifs.

En outre, il est bien entendu que ces différents modes de réalisation peuvent être combinés entre-eux pour améliorer la qualité de l'assemblage de l'aiguille avec son arbre d'entraînement, en particulier du point de vue de son caractère quasi-réversible.

### BRÈVE DESCRIPTION DES DESSINS

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1a représente une vue en perspective d'une partie du dispositif indicateur selon un premier mode de réalisation de la présente invention;
- la figure 1b représente une vue en coupe simplifiée du dispositif indicateur représenté sur la figure 1a;
- la figure 2a représente une vue en perspective d'une partie du dispositif indicateur selon un second mode de réalisation de la présente invention;
- la figure 2b représente une vue en coupe du dispositif indicateur représenté sur la figure 2a;
- la figure 3 représente une vue partielle en coupe, similaire à celle de la figure 2a, pour un troisième mode de réalisation de la présente invention, et
- la figure 4 représente une vue similaire à celle de la figure 3 pour un quatrième mode de réalisation de la présente invention.

### DESCRIPTION DÉTAILLÉE

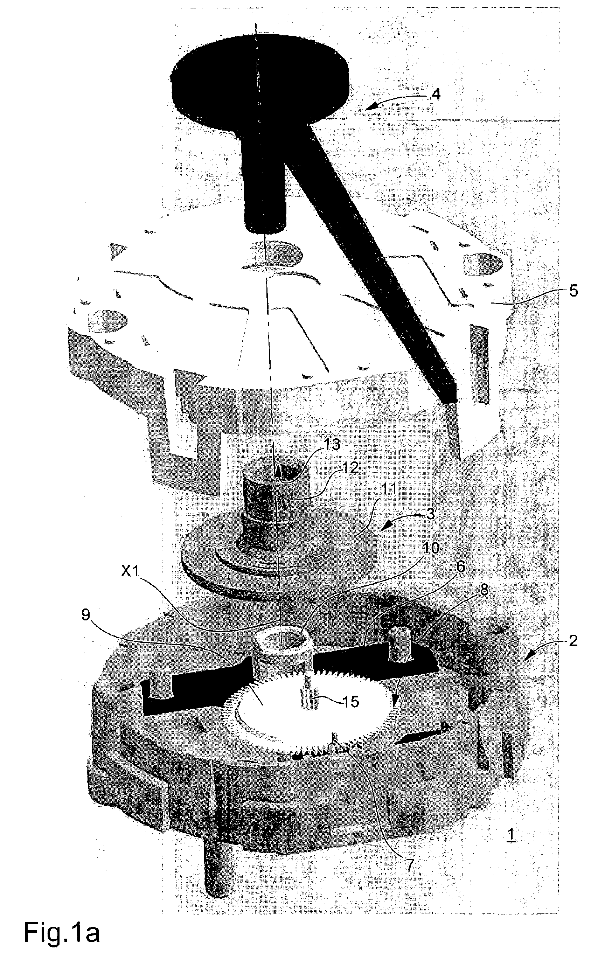

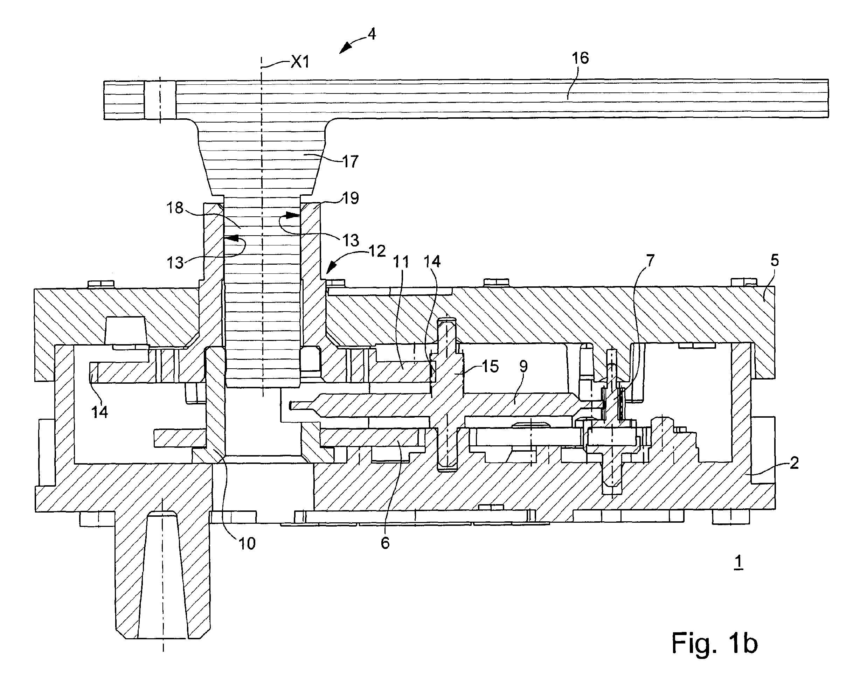

Les figures 1a et 1b représentent respectivement une vue en perspective et en coupe d'un dispositif indicateur à aiguille selon un premier mode de réalisation de la présente invention. Plus précisément, la figure 1a représente une partie d'un tel dispositif, à savoir un micromoteur 1, dont le fond 2 du boîtier est ouvert et surmonté d'un mobile d'entraînement 3 et d'une aiguille indicatrice 4. Le micromoteur comporte en outre un couvercle 5 qui coopère avec le fond 2 pour fermer le boîtier avant la mise en place de l'aiguille 4.

Typiquement, un tel micromoteur est destiné à être disposé sur une plaquette à circuits imprimés et à être surmonté d'un cadran (non représentés), l'aiguille étant mise en place dans l'arbre après le montage du cadran pour indiquer les variations d'une grandeur mesurée en regard de ce dernier.

Le micromoteur 1 comporte un moteur de type conventionnel comprenant un stator 6 et un rotor non visible sur cette figure. Des moyens d'alimentation en énergie électrique du moteur sont normalement présents mais n'ont pas été représentés pour plus de clarté. Le rotor est solidaire d'un pignon 7 qui lui est coaxial et qui est agencé en prise avec la denture 8 de la roue d'un mobile intermédiaire 9. Un palier 10 est disposé sur la partie du stator opposée à l'emplacement du rotor et est prévu pour loger le mobile d'entraînement 3.

Le mobile d'entraînement 3 est composé d'une roue 11 et d'un arbre creux 12, coaxial à la roue 11, d'axe X1, et s'étendant à partir de cette dernière en direction de l'aiguille 4. Il est apparent de la figure 1 a que l'arbre creux 12 présente une section, dans un plan perpendiculaire à l'axe X1, qui comprend une pluralité de pans 13 sensiblement rectilignes, au nombre de huit pour le mode de réalisation représenté ici. Bien entendu, le nombre de pans représentés sur la figure 1a n'est pas limitatif et l'homme du métier ne rencontrera pas de difficulté particulière pour déterminer le nombre de pans le mieux adapté pour une structure particulière. On peut prévoir, de manière préférée, que la section de l'arbre creux 12 est de type polygonal et comprend n pans, n étant supérieur ou égal à 3. En particulier, un arbre à 6 pans est préféré du point de vue du compromis entre l'efficacité de sa liaison mécanique avec la tige d'aiguille et la complexité de fabrication.

De manière avantageuse, le mobile d'entraînement 3 est préférablement réalisé d'une pièce, par moulage conventionnel de matière plastique.

La figure 1b représente, de manière simplifiée, le micromoteur 1 de la figure 1a lorsqu'il est assemblé, c'est-à-dire lorsque le mobile d'entraînement 3, le couvercle 5 et l'aiguille 4 sont mis en place.

On constate sur la figure 1b que le mobile d'entraînement 3 repose sur le palier 10 et comporte une denture 14 (non représentée sur la figure 1a dans un but de simplification) qui engrène avec un pignon 15 solidaire de la roue intermédiaire 9.

L'aiguille 4 comprend un index 16 de la base 17 duquel s'étend une tige 18 dans une direction perpendiculaire à la direction de l'index 16. Préférablement, l'aiguille 4 est réalisée d'une pièce par un moulage conventionnel de matière plastique. L'aiguille 4 est logée à l'intérieur de l'arbre creux 12 par sa tige 18.

On constate sur la figure 1b que la liaison mécanique entre la tige 18 et l'arbre 12 a lieu sur toute la longueur des pans 13, ces derniers ne s'étendant pas ici sur toute la hauteur de l'arbre 12. La longueur des pans 13 est représentée à titre illustratif non limitatif. En effet, on peut prévoir de manière alternative que les pans 13 s'étendent sur toute la hauteur de l'arbre 12 ou encore qu'ils présentent une longueur relativement faible. De même, le fait que les pans 13 ont été représentés au niveau de l'extrémité 19 de l'arbre située du côté de l'aiguille 4 n'est pas non plus limitatif. On pourrait prévoir de façon équivalente de ménager les pans 13 à un autre emplacement de l'arbre, comme dans sa région centrale ou encore dans la région de son extrémité la plus éloignée de l'aiguille 4.

Pour être plus précis, du fait de cette structure, le contact entre les pans 13 et la tige 18 d'aiguille intervient sensiblement au niveau de la ligne médiane de chacun des pans qui est parallèle à l'axe X1. Autrement dit, sur chacun des pans 13, la zone de contact avec la tige 18 présente sensiblement la forme d'un segment de droite, dont la longueur correspond à la hauteur du pan.

En outre, il convient de noter que les dimensions de la tige 18 et de l'intérieur de l'arbre creux 12 sont ajustées, aux tolérances de fabrication près, de telle manière que, lorsque la tige 18 est logée à l'intérieur de l'arbre 12, chacun de ces deux éléments subisse une légère déformation dans son domaine élastique.

Cette caractéristique particulière permet un démontage ultérieur de l'aiguille 4 hors de l'arbre 12 sans que sa tige ne soit endommagée, tout en garantissant une qualité de la connexion mécanique répondant aux exigences de l'application pour laquelle le dispositif est construit. Pour reprendre l'exemple d'application précité dans le domaine des tableaux de bord pour véhicule automobile, l'une des exigences à laquelle doit satisfaire un tel dispositif indicateur concerne le couple minimum que le mobile d'entraînement 3 doit pouvoir transmettre à l'aiguille 4, sans qu'un glissement intervienne entre la tige d'aiguille et l'arbre.

Ainsi, la Demanderesse a pu mettre en évidence, au cours de nombreuses expérimentations, qu'il est possible de trouver un compromis entre le couple transmis et le nombre de démontages successifs que peut supporter l'aiguille avant d'être endommagée. A titre d'exemple, la Demanderesse a constaté que pour l'ordre de grandeur du couple nécessaire dans le domaine automobile, à savoir environ 5 mN.m, il est possible d'ajuster les dimensions respectives de l'arbre et de la tige d'aiguille de telle manière que cette dernière peut être démontée successivement jusqu'à environ 5 fois sans subir de dommage.

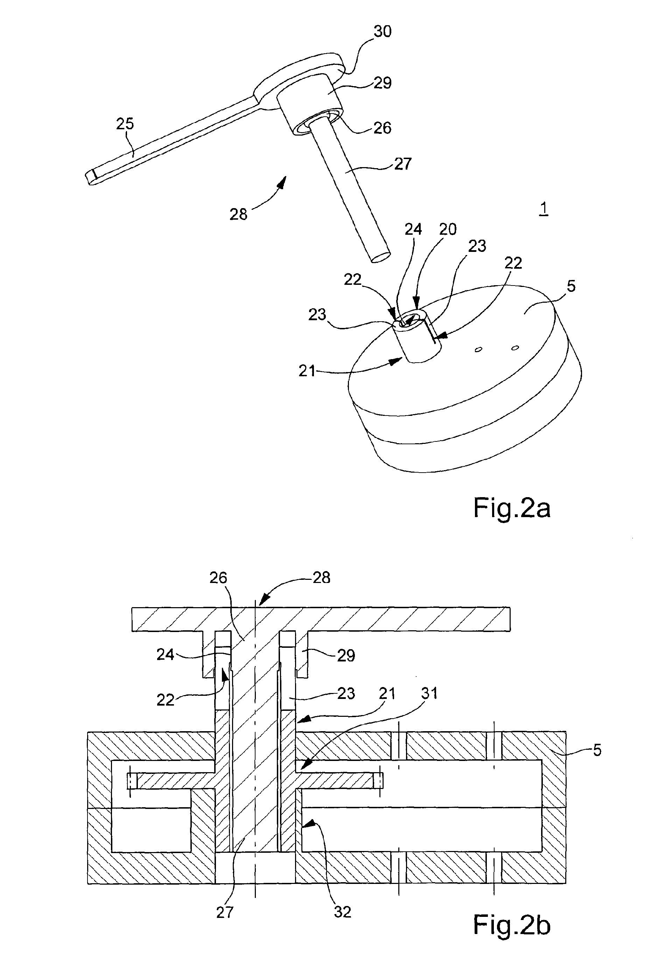

Les figures 2a et 2b représentent, de manière schématique, une partie d'un dispositif indicateur à aiguille, selon un second mode de réalisation, respectivement en perspective et en coupe.

Le micromoteur 1 est représenté fermé par son couvercle 5 sur les figures 2a et 2b. Sur la figure 2a, on distingue l'extrémité 20 d'un arbre creux 21 débouchant à l'extérieur du couvercle 5 au travers d'une ouverture adaptée de ce dernier et dont la paroi joue un rôle de guidage radial de l'arbre.

On constate que l'arbre 21 comporte deux fentes 22 longitudinales qui s'étendent sur pratiquement toute la partie de l'arbre dépassant à l'extérieur du boîtier. Les fentes 22 sont sensiblement diamétralement opposées de façon à définir deux languettes 23 de section semi-circulaire susceptibles de se déplacer l'une par rapport à l'autre, de manière élastique. On constate en outre que chacune des languettes 23 comprend un petit épaulement 24 (mieux visible sur la figure 2b) à proximité de l'extrémité 20 de l'arbre. Ainsi, chacune des languettes 23 présente une épaisseur plus importante dans sa partie qui s'étend depuis l'épaulement 24 jusqu'à l'extrémité 20 de l'arbre 21 que dans sa partie qui s'étend à partir de l'épaulement 24 et en direction du boîtier.

Par ailleurs, il est apparent de la figure 2a qu'en plus d'un index 25, de sa base 26, et d'une tige 27, de diamètre sensiblement inférieur à celui de la base 26, l'aiguille 28 comprend une bague 29. La bague 29 s'étend à partir de la surface inférieure 30 de l'index 25 d'aiguille en étant coaxiale à la tige 27. La bague 29 a été représentée ici, à titre non limitatif, avec une hauteur légèrement supérieure à la hauteur de la base 26 de l'index. Le diamètre intérieur de la bague 29 est légèrement supérieur au diamètre extérieur de l'arbre creux 21.

Ainsi, la bague 29 est destinée à enserrer l'arbre 21 lorsque l'aiguille 28 est montée sur le micromoteur, comme cela ressort plus clairement de la vue en coupe représentée sur la figure 2b.

La figure 2b a volontairement été simplifiée pour mettre en évidence les éléments techniques relatifs à la présente invention.

Ainsi, les moyens moteurs permettant d'entraîner le mobile d'entraînement 31 n'ont pas été représentés, de même que les rouages de transmission. La figure 2b représente, de façon schématique, le boîtier en deux parties du micromoteur 1, à savoir le fond 2 et le couvercle 5, de même qu'un palier 32 symbolisé comme étant formé d'une pièce avec le fond 2.

La figure 2b permet de mieux identifier les zones de contact entre la tige 27 d'aiguille et l'arbre creux 21 d'entraînement. En effet, la tige 27 est logée à l'intérieur de l'arbre creux 21 de telle manière que sa base 26 se trouve en regard des petits épaulements 24. Ainsi, chacune des languettes 23 exerce une force de pression sur la base 26 de la tige 27 d'aiguille, via son épaulement 24.

On constate qu'en outre la bague 29 est arrangée contre les languettes 23 lorsque l'aiguille 28 est mise en place à l'intérieur de l'arbre creux 21. Ainsi, les languettes 23 subissent une force de pression exercée par la bague annulaire 29 qui tend à les repousser vers l'intérieur de l'arbre creux 21, c'est-à-dire contre la base 26 de la tige 27 d'aiguille. La structure de la bague 29 permet donc de renforcer la friction issue du contact entre les épaulements 24 et la tige 27 pour que le mobile d'entraînement 31 transmette son mouvement de rotation à l'aiguille 28 sans glissement.

En outre, il convient de noter que les dimensions de la tige 27, de l'intérieur de l'arbre creux 21 et de la bague 29 sont ajustées, aux tolérances de fabrication près, de telle manière que, lorsque la tige 27 est logée à l'intérieur de l'arbre 21, chacun des trois éléments précités subisse une légère déformation dans son domaine élastique.

Cette caractéristique particulière permet un démontage ultérieur de l'aiguille 28 hors de l'arbre 21 sans que sa tige 27 ne soit endommagée, tout en garantissant une qualité de la connexion mécanique répondant aux exigences de l'application pour laquelle le dispositif est construit.

De même que pour le mode de réalisation précédent, la Demanderesse a mis en évidence le fait qu'il est possible d'ajuster les dimensions respectives de l'arbre creux, de la tige d'aiguille et de la bague de telle manière que cette dernière peut être démontée successivement jusqu'à environ 5 fois sans subir de dommage.

Il convient de noter en outre que les deux modes de réalisations décrits ci-dessus présentent deux avantages supplémentaires du point de vue de l'assemblage de l'aiguille sur le micromoteur. D'une part, il est possible de procéder à cet assemblage quelles que soient les positions angulaires relatives de l'aiguille et de l'arbre creux, dans la mesure où ces deux derniers éléments structurels présentent chacun une symétrie de rotation par rapport à l'axe X1. D'autre part, la structure des moyens d'assemblages décrits permet de réaliser l'assemblage de l'aiguille sur l'arbre creux non pas dans une position axiale relative prédéfinie de ces éléments mais suivant une certaine plage. Autrement dit, cette caractéristique permet un ajustement de la position axiale de l'aiguille par rapport au micromoteur dans une certaine mesure pour tenir compte, par exemple, de l'utilisation de cadrans d'épaisseurs différentes avec un seul type de dispositif indicateur selon la présente invention.

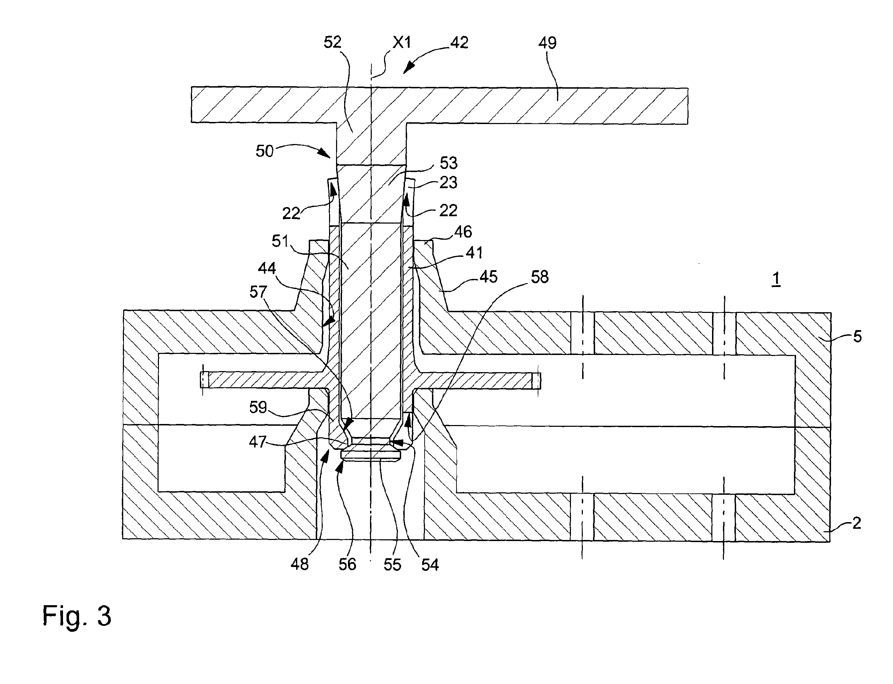

La figure 3 représente un troisième mode de réalisation du dispositif indicateur selon la présente invention, de manière schématique et dans une vue simplifiée similaire à la vue de la figure 2b. Les éléments identiques aux éléments décrits en relation avec les figures précédentes portent les mêmes références numériques.

De même que dans les modes de réalisation précédents, le mobile d'entraînement 40 comporte un arbre creux 41 d'entraînement d'une aiguille 42. Le mobile d'entraînement 40 repose sur un palier 43, préférablement formé d'une seule pièce avec le fond 2 du boîtier du micromoteur 1.

Le couvercle 5 du boîtier présente une ouverture 44 permettant à une partie de l'arbre 41 de s'étendre à l'extérieur du boîtier. L'ouverture 44 est surmontée d'une bague 45 dont le diamètre interne diminue depuis le couvercle et en direction de l'aiguille 42. Ainsi, dans la région de son extrémité 46 située du côté de l'aiguille 42, la bague 45 présente un diamètre interne minimal, celui-ci étant légèrement supérieur au diamètre externe de l'arbre creux 41, de telle manière que la bague joue un rôle de guide radial pour l'arbre.

Par ailleurs, on constate sur la figure 3 que l'arbre creux 41 comporte deux fentes 22 longitudinales qui s'étendent sur pratiquement toute la partie de l'arbre dépassant à l'extérieur de la bague 45 du couvercle 5. Les fentes 22 sont sensiblement diamétralement opposées de façon à définir deux languettes 23 de section semi-circulaire susceptibles de se déplacer l'une par rapport à l'autre, de manière élastique. Bien entendu, le nombre de languettes décrit en relation avec la figure 3 n'est pas limitatif et on peut prévoir de manière générale qu'il est au moins égal à deux.

En outre, il est prévu de ménager un bourrelet annulaire 47 à l'intérieur de l'arbre creux 41, représenté ici à titre non limitatif dans la région de l'arbre située à proximité de son extrémité 48 intérieure au boîtier du micromoteur. Bien entendu, le bourrelet 47 peut être ménagé à n'importe quel niveau à l'intérieur de l'arbre creux 41, sans sortir du cadre de la présente invention.

L'aiguille 42 comporte un index 49 porté par une base 50, elle-même reliée à une tige 51, cette dernière étant logée à l'intérieur de l'arbre creux 41. La base 50 de l'aiguille comprend deux portions, une première portion 52 s'étendant à partir de l'index 49 et présentant une forme cylindrique et, une seconde portion 53 reliant la première portion 52 à la tige 51 et présentant une forme tronconique, la tige présentant un diamètre plus faible que la première portion 52.

On constate également sur la figure 3 que la tige 51 de l'aiguille 42 comprend une gorge annulaire 54 ménagée dans la région de son extrémité libre 55. Il est apparent de cette figure que la fonction de la gorge 54 est de coopérer avec le bourrelet 47 pour assurer une contribution au maintien axial de la tige 51 dans l'arbre creux 41 lorsque l'aiguille 42 est mise en place dans le micromoteur 1.

Il est à noter que les formes représentées pour le bourrelet 47 et pour la gorge annulaire 54 ne sont pas limitatives. L'homme du métier pourra adapter ces formes sans difficulté en fonction de ses propres besoins. En particulier, on constate dans l'exemple représenté sur la figure 3 que l'extrémité 55 de la tige 51 est pourvue d'un petit chanfrein 56 destiné à faciliter le franchissement du bourrelet 47 lorsque la tige est introduite à l'intérieur de l'arbre 41. De même, il est apparent de la figure 3 que la surface 57 du bourrelet 47, destinée à entrer en contact avec l'extrémité 55 de la tige 51 lors de l'introduction de cette dernière à l'intérieur de l'arbre creux 41, est inclinée par rapport à la direction de l'introduction pour ne pas provoquer un effet de butée.

En outre, suivant les dimensions respectives de la gorge 54 et du bourrelet 47, il est avantageux de prévoir au moins une fente longitudinale 58, préférablement trois, dans l'arbre 41 s'étendant sur une hauteur supérieure à la hauteur du bourrelet et débouchant au niveau de l'extrémité 48 de l'arbre située dans le boîtier du micromoteur 1. Ainsi, une pluralité de languettes 59 élastiques sont également formées dans la région de cette extrémité 48 de l'arbre.

Par conséquent, les languettes 59 se déforment de manière élastique lors du passage de l'extrémité 55 de la tige 51 d'aiguille au niveau du bourrelet 47, sans opposer une résistance importante, pour permettre un "clipsage" de l'aiguille dans l'arbre creux.

Lorsque l'aiguille 42 est logée à l'intérieur de l'arbre 41, tel que représenté, la base 50 de l'aiguille 42 se trouve au contact des languettes 23 de l'arbre, par le biais de sa seconde portion 53. On constate que, dans la zone de contact, les dimensions transversales respectives, c'est-à-dire selon une direction perpendiculaire à l'axe X1, de la seconde portion 53 et de l'intérieur de l'arbre 41 sont telles que les languettes 23 subissent une légère déformation élastique lorsque l'aiguille est en place. Autrement dit, le diamètre extérieur de la seconde portion 53 au niveau de la zone de contact est légèrement supérieur au diamètre interne de l'arbre creux 41 lorsque ce dernier n'est pas déformé.

Grâce à une telle configuration, le contact entre la tige 51 et l'arbre creux 41 garantit un maintien suffisant pour assurer un entraînement efficace, à savoir sans glissement, de l'aiguille 42 par le mobile d'entraînement 40.

On peut noter que la force de pression exercée par les languettes 23 sur la seconde portion 53 de la base 50 tend à repousser l'aiguille 42 hors du boîtier du micromoteur 1. Toutefois, le configuration représentée pour la coopération entre le bourrelet 47 et la gorge 54 de la tige 51 d'aiguille, non seulement, empêche l'aiguille de remonter au-delà d'un certain niveau mais assure en outre son positionnement axial.

Dans la mesure où toutes les déformations décrites ci-dessus en relation avec la figure 3 interviennent dans les domaines élastiques respectifs des divers constituants impliqués, la structure selon le présent mode de réalisation autorise une pluralité de démontages de l'aiguille hors de l'arbre creux sans que ni l'un ni l'autre de ces éléments ne soit endommagé.

De même que dans le cas des deux premiers modes de réalisation décrits, on peut noter que la structure selon le présent mode de réalisation permet avantageusement de réaliser l'assemblage de l'aiguille sur l'arbre creux indépendamment des positions angulaires relatives de ces deux éléments.

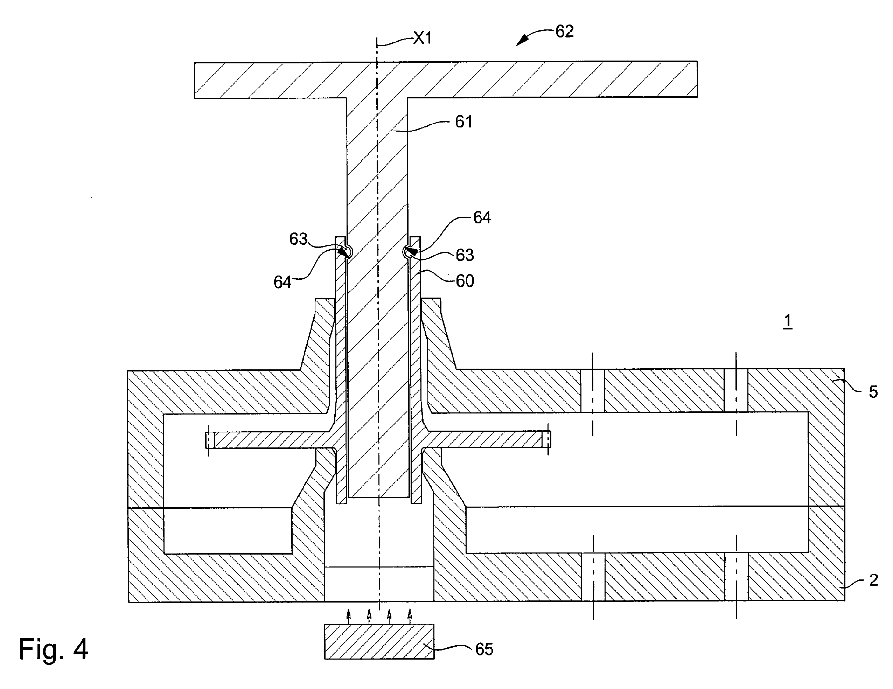

La figure 4 représente un quatrième mode de réalisation de la présente invention dans une vue simplifiée similaire à la vue de la figure 3.

La structure selon le présent mode de réalisation propose un dispositif de "clipsage" qui permet simultanément d'assurer le maintien axial de la tige dans l'arbre creux et d'assurer un entraînement efficace en rotation de l'aiguille par le mobile d'entraînement.

En effet, l'arbre creux 60 présente ici une section circulaire constante sur toute sa longueur, de même que la tige 61 de l'aiguille 62. Toutefois, des protubérances 63 sont ménagées à l'intérieur de l'arbre 60, dans sa partie émergeant du boîtier du micromoteur 1 sur la figure 4. En outre, des évidements 64 sont prévus dans la tige 61 de l'aiguille présentant une forme complémentaire à la forme des protubérances 63.

Dans l'exemple illustré à titre non limitatif, les protubérances 63 présentent une forme de calotte sphérique de rayon R1, tandis que les évidements 64 présentent une forme complémentaire de rayon R2, R2 étant très légèrement supérieur à R1.

De plus, au moins deux fentes longitudinales (non visibles sur la coupe de la figure 4, mais similaires aux fentes 22 décrites en relation avec les modes de réalisation précédents) sont ménagées à l'extrémité de l'arbre située hors du boîtier du micromoteur, de manière à former deux languettes 23.

Ainsi, l'aiguille 62 est logée dans l'arbre creux 60, pour être disposée dans la configuration représentée sur la figure 4, en passant par une étape de déformation des languettes 23 depuis le premier contact de l'extrémité interne 65 de la tige 61 et jusqu'à ce que les évidements 64 se trouvent situés en regard des protubérances 63. A ce stade, les languettes 23 reprennent leur position de repos, qui correspond à la position représentée, par déformation élastique.

Les zones de contact entre la tige et l'arbre creux sont donc situées à l'interface entre les protubérances 63 et les évidements 64 et présentent une forme de calotte sphérique. Par conséquent, la tige 61 et l'arbre 60 sont rendus solidaires l'un de l'autre par ce moyen, tant pour les déplacements dans la direction de l'axe X1 que pour les mouvements de rotation autour de l'axe X1.

Comme mentionné précédemment, le fait que les languettes 23 présentent uniquement des déformations dans leur domaine de déformations élastiques permet une pluralité de démontages de l'aiguille hors de l'arbre creux sans que ni l'un ni l'autre de ces éléments ne soit endommagé.

Bien entendu, on peut prévoir de ménager les protubérances 63 à un niveau différent de l'arbre creux 60 que celui représenté sur la figure 4, comme par exemple dans la région de son extrémité située à l'intérieur du boîtier du micromoteur 1. On peut également prévoir de disposer les protubérances 63 dans la région centrale de l'arbre creux. Toutefois, dans ce dernier cas, les fentes 22 ne sont pas rectilignes mais il est nécessaire de prévoir des fentes en trois parties rectilignes pour définir une languette sensiblement rectangulaire et liée à l'arbre par un côté, chaque languette portant préférablement une protubérance.

La description qui précède correspond à des modes de réalisation particuliers et ne saurait en aucun cas être considérée comme limitative, en ce qui concerne plus particulièrement la forme décrite et représentée pour les moyens permettant d'assurer le couplage entre la tige d'aiguille et l'arbre d'entraînement, ainsi que leurs emplacements respectifs.

A titre d'exemple, on peut prévoir un certain nombre de variantes sur la base des modes de réalisation précédemment décrits sans sortir du cadre de la présente invention. On peut notamment combiner les moyens mécaniques mis en oeuvre respectivement dans le premier et dans le second modes de réalisation décrits, c'est-à-dire prévoir que l'arbre creux présente une section interne de type polygonal tandis que la base de l'index d'aiguille présente une bague destinée à être disposée autour de l'extrémité de l'arbre.

Par ailleurs, de manière alternative à ce qui a été décrit en relation avec la figure 3, on peut prévoir que la base de l'index d'aiguille présente un même diamètre que la tige d'aiguille, ce diamètre étant légèrement inférieur au diamètre interne de l'arbre creux. Dans ce cas, pour assurer l'entraînement en rotation de l'aiguille par l'arbre, on peut ménager un ou plusieurs ergots sur la tige d'aiguille destinés à coopérer avec les fentes longitudinales 22 de l'arbre. Le maintien axial de l'aiguille dans l'arbre peut être assuré de la manière décrite en relation avec la figure 3, c'est-à-dire par la coopération entre la gorge annulaire de la tige d'aiguille et le bourrelet de l'arbre creux.

On peut noter que la structure selon la présente invention est parfaitement adaptée à la mise en place d'une source lumineuse (schématisée sur la figure 4 et repérée par la référence numérique 65) dans le prolongement de la tige d'aiguille dans le but de produire une illumination de l'index de très bonne qualité. En particulier, la structure selon la présente invention assure un maintien mécanique efficace de l'aiguille tout en permettant de conserver une forme cylindrique pour sa tige, une telle forme étant mieux adaptée à la transmission de lumière depuis le bas de la tige jusqu'à l'index de l'aiguille.

## Revendications

1. Dispositif indicateur à aiguille comportant une aiguille (4) comprenant notamment une tige (18) portant un index (16), et un organe moteur comprenant un arbre (12) d'axe X1 présentant un creux à l'intérieur duquel est destinée à être montée ladite tige (18) d'aiguille, **caractérisé en ce qu'**il comporte en outre des moyens mécaniques (13; 24, 29; 47, 54; 63, 64) pour permettre une pluralité de démontages de ladite aiguille (4) hors de l'arbre (12) sans que l'un ou l'autre de ces derniers éléments ne subisse de dommages le rendant inapte à l'utilisation.

2. Dispositif selon la revendication 1, **caractérisé en ce que** lesdits moyens mécaniques (13) sont notamment arrangés dans ledit creux d'arbre (12) qui présente une section, dans un plan sensiblement perpendiculaire au dit axe X1, en forme de polygone à n côtés, n étant supérieur ou égal à 3, ladite tige (18) d'aiguille étant cylindrique.

3. Dispositif selon la revendication 1 ou 2, **caractérisé en ce que** lesdits moyens mécaniques comprennent notamment une bague (29) solidaire de la base (26) dudit index (25) de ladite aiguille (28), ladite bague (29) étant arrangée de manière concentrique autour de la base (26) du dit index (25) d'aiguille (28) et présentant un diamètre intérieur sensiblement supérieur au diamètre extérieur dudit arbre (21).

4. Dispositif selon l'une des revendications 1 à 3, **caractérisé en ce que** lesdits moyens mécaniques comprennent au moins une protubérance (63) arrangée à l'intérieur dudit arbre creux (60) et destinée à coopérer avec un évidement (64) adapté de ladite tige (61) d'aiguille (62).

5. Dispositif selon la revendication 4, **caractérisé en ce que** ladite protubérance est réalisée sous la forme d'un bourrelet annulaire (47), ledit évidement présentant la forme d'une gorge (54) ménagée dans ladite tige (51) d'aiguille (42).

6. Dispositif selon la revendication 5, **caractérisé en ce que** ledit bourrelet (47) est arrangé dans la région de l'une des extrémités (48) dudit arbre creux (41).

7. Dispositif selon l'une des revendications 1 à 3, **caractérisé en ce que** ladite aiguille et ledit arbre creux sont susceptibles d'être assemblés dans des positions angulaires relatives quelconques.

8. Dispositif selon l'une des revendications 1 à 3 ou 7, **caractérisé en ce que** la position de ladite aiguille par rapport au dit arbre creux suivant la direction dudit axe X1 est susceptible d'être ajustée.

9. Dispositif selon l'une quelconque des revendications précédentes, **caractérisé en ce que**, ladite tige étant disposée dans ledit creux d'arbre, ledit arbre présente une déformation radiale essentiellement dans un domaine de déformation élastique.

10. Dispositif selon les revendications 3 et 9, **caractérisé en ce que** ladite bague (29) présente également une déformation radiale essentiellement dans un domaine de déformation élastique.

11. Dispositif selon l'une des revendications 3 à 10, **caractérisé en ce que** lesdits moyens mécaniques comportent en outre au moins une fente longitudinale (22) ménagée dans ledit arbre et débouchant à l'extrémité de l'arbre située du côté de ladite aiguille.

12. Dispositif selon l'une quelconque des revendications précédentes, **caractérisé en ce que** ledit arbre et au moins ladite tige d'aiguille sont réalisés en matériau plastique.

13. Dispositif selon les revendications 3 et 12, **caractérisé en ce que** ladite bague (29) est moulée d'une pièce au moins avec ledit index de ladite aiguille.

14. Dispositif selon la revendication 13, **caractérisé en ce que** ladite tige d'aiguille est également moulée d'une pièce avec ledit index et ladite bague (29).

15. Dispositif selon l'une quelconque des revendications précédentes, **caractérisé en ce qu'**il comporte en outre une source lumineuse (65) dont la lumière est susceptible d'être transmise au travers de ladite tige d'aiguille pour éclairer ledit index d'aiguille.

16. Aiguille indicatrice (28) pour dispositif indicateur comportant une tige (27), un index (25) reliée, au niveau de sa surface inférieure (30), à ladite tige via une base (26), **caractérisée en ce qu'**elle comporte en outre une bague (29) solidaire de ladite surface inférieure (30) et arrangée de manière concentrique autour de ladite base (26) d'aiguille.

17. Moteur pour dispositif indicateur à aiguille comportant des moyens moteurs destinés à entraîner en rotation un arbre (12) de sortie du moteur, autour d'un axe X1, **caractérisé en ce que** ledit arbre de sortie présente, au moins sur une partie de sa hauteur, une section, dans un plan sensiblement perpendiculaire au dit axe X1, en forme de polygone à n côtés, n étant supérieur ou égal à 3.
